# EUROPÄISCHE PATENTSCHRIFT

(11) **EP 3 333 115 B1**
(45) Veröffentlichungstag und Bekanntmachung des Hinweises auf die Patenterteilung: **27.03.2019**
(21) Anmeldenummer: 17204282.2
(22) Anmeldetag: 29.11.2017
(51) Int. Cl.: B66F 9/06, B66F 9/075, G05D 1/02

(54) **VERFAHREN ZUR AUTOMATISCHEN AUSRICHTUNG EINES FLURFÖRDERZEUGS IN EINEM WARENLAGER SOWIE SYSTEM AUS EINEM FLURFÖRDERZEUG UND EINEM WARENLAGER**
METHOD FOR AUTOMATIC ALIGNMENT OF AN INDUSTRIAL TRUCK IN A WAREHOUSE AND SYSTEM CONSISTING OF AN INDUSTRIAL TRUCK AND A WAREHOUSE
PROCÉDÉ D'ALIGNEMENT AUTOMATIQUE D'UN CHARIOT DE MANUTENTION DANS UN ENTREPÔT AINSI QUE SYSTÈME COMPORTANT UN CHARIOT DE MANUTENTION ET UN ENTREPÔT

(30) Priorität: 06.12.2016 DE 102016123541
(43) Veröffentlichungstag der Anmeldung: 13.06.2018
(73) Patentinhaber: Jungheinrich Aktiengesellschaft, 22047 Hamburg (DE)
(72) Erfinder: Göpner, Oliver, 23845 Oering (DE)
(74) Vertreter: Hauck Patentanwaltspartnerschaft mbB

(56) Entgegenhaltungen:
- EP-A1- 2 500 871
- EP-B1- 2 851 331
- WO-A2-2011/002478
- DE-A1-102016 107 451

## Beschreibung

Die Erfindung betrifft ein Verfahren zur automatischen Ausrichtung eines Flurförderzeugs, insbesondere eines Kommissionierfahrzeugs, in einem Warenlager. Weiterhin betrifft die Erfindung ein System aus einem Flurförderzeug, insbesondere eines Kommissionierfahrzeugs, und einem Warenlager.

Flurförderzeuge müssen zur korrekten Aufnahme wie Abgabe von zu transportierenden Waren innerhalb eines Warenlagers ausgerichtet werden. So werden beispielsweise Kommissionierfahrzeuge innerhalb eines Regalgangs eines Warenlagers in der Nähe eines Lagerplatzes positioniert, von dem Materialien entnommen werden sollen. Das Kommissionierfahrzeug wird also auf einer Seite des Regalgangs positioniert. Dies ermöglicht dem Bediener einen möglichst kurzen Transportweg von dem Lagerplatz zu dem Kommissionierfahrzeug. Heutzutage erfolgt eine derartige Seitenorientierung eines Kommissionierfahrzeugs innerhalb des Regalgangs im Wesentlichen manuell. So ist es beispielsweise bekannt, dass der Bediener das Flurförderzeug über eine am Flurförderzeug vorgesehene Bedieneinheit oder eine Fernbedienung an die entsprechende Regalseite heranfährt. Auch sind halbautomatische Vorgänge bekannt, bei denen der Bediener durch einen Knopfdruck vorgibt, ob sich das Flurförderzeug beispielsweise rechts oder links am Regal orientieren soll und das Flurförderzeug anschließend selbstständig an die entsprechende Regalseite heranfährt. Auch ist es möglich, dass sich das Flurförderzeug automatisch an der Regalseite orientiert, an welche es (manuell) durch den Bediener herangefahren wurde. Die beschriebenen Verfahren erfordern also stets zusätzliche Eingaben durch eine Bedienperson zur Vorgabe einer Seitenorientierung.

Aus EP 2 851 331 B1 ist ein Verfahren zur Steuerung eines Flurförderzeugs bekannt, bei dem das Flurförderzeug einen optischen Sensor mit einem Überwachungsbereich aufweist, wobei der optische Sensor mit einer Steuerungsvorrichtung verbunden ist, die die Position einer Person innerhalb eines für den optischen Sensor vorgegebenen Überwachungsbereich bestimmt und das Flurförderzeug der Person nachführt. Hierfür sind innerhalb des Überwachungsbereichs Überwachungsgrenzen vorgegeben, deren Überschreitung durch eine Person von einer Steuervorrichtung überwacht wird. Wird ein Überschreiten einer Überwachungsgrenze festgestellt, so wird ein Fahrantrieb des Flurförderzeugs angesteuert, um das Fahrzeug vorwärts zu bewegen bis sich die Person wieder auf der ursprünglichen Seite der Überwachungsgrenze befindet. Auf diese Weise wird das Fahrzeug der Person nachgeführt.

Aus EP 2 500 871 A1 ist ein Verfahren zur Integration eines autonomen Flurförderzeugs in ein Anlagenverwaltungssystem bekannt. Das Flurförderzeug verfügt über ein Navigationssystem sowie über eine Vielzahl weiterer Sensoren, deren Daten kabellos an das Anlagenverwaltungssystem übertragen werden. Über das Anlagenverwaltungssystem kann eine Bedienperson mit dem Flurförderzeug interagieren und dieses somit fernsteuern. Sollte das Flurförderzeug arbeitsunfähig werden, beispielsweise aufgrund eines Hindernisses in seinem Fahrweg, so wird das Ereignis dem Anlagenverwaltungssystem mitgeteilt, woraufhin eine Bedienperson in das Fahrverhalten des Flurförderzeugs eingreifen kann.

Der Erfindung liegt die Aufgabe zugrunde, die Bewegung eines Flurförderzeugs in einem Warenlager weiter zu vereinfachen, insbesondere weiter zu automatisieren.

Die Erfindung löst die Aufgabe mit einem Verfahren gemäß Anspruch 1 sowie mit einem System gemäß Anspruch 7. Bevorzugte Ausgestaltungen sind Teil der Unteransprüche, der Beschreibung sowie der Figuren.

Das erfindungsgemäße Verfahren zur automatischen Ausrichtung eines Flurförderzeugs in einem Warenlager umfasst die Schritte:
- Bestätigen eines Picks durch eine Bedienperson,
- Bestimmen einer Position des Flurförderzeugs in einem Warenlager anhand der Position des bestätigten Picks durch eine Lagerverwaltungssystem,
- Bestimmen einer Seitenorientierung des Flurförderzeugs relativ zu einer Regalseite eines Regalgangs des Warenlagers anhand der Position des bestätigten Picks durch das Lagerverwaltungssystem,
- Ermitteln der nächsten Pick-Position in dem Warenlager durch das Lagerverwaltungssystem,
- Übermitteln eines Steuerbefehls für einen Fahrantrieb und/oder eine Lenkung des Flurförderzeugs durch das Lagerverwaltungssystem an das Flurförderzeug,
- Ausrichten des Flurförderzeugs ansprechend auf den übermittelten Steuerbefehl in eine vorbestimmte Seitenorientierung für die nächste Pick-Position in dem Warenlager, und
- Anfahren der nächsten Pick-Position ansprechend auf ein durch die Bedienperson ausgelöstes Fahrsignal.

Das erfindungsgemäße System aus einem Flurförderzeug und einem Warenlager umfasst:
- Eine an einem Flurförderzeug angeordnete Eingabeeinheit, dazu ausgebildet, durch eine Bedienperson ausgelöste Bedienfehle zum Bestätigen eines Picks und zur Bewegung eines Flurförderzeugs zu empfangen,
- Ein Lagerverwaltungssystem, dazu ausgebildet, eine Position des Flurförderzeugs in einem Warenlager und eine Seitenorientierung des Flurförderzeugs relativ zu einer Regalseite eines Regalgangs des Warenlagers anhand der Position des bestätigten Picks zu bestimmen, die nächsten Pick-Positionen in dem Warenlager anhand eines aktuellen Auftrags zu ermitteln und einen Steuerbefehl an das Flurförderzeug zu übermitteln,
- Eine Steuereinheit des Flurförderzeugs, dazu ausgebildet, dem von dem Lagerverwaltungssystem übermittelten Steuerbefehl zu empfangen und einen Fahrantrieb und/oder eine Lenkung des Flurförderzeugs zum automatischen Ausrichten des Flurförderzeugs in eine vorbestimmte Seitenorientierung für die nächste Pick-Position in dem Warenlager anzusteuern.

Erfindungsgemäß erfolgt also zunächst die Bestätigung eines Picks durch eine Bedienperson. Unter dem Begriff "Pick" ist im Rahmen dieser Anmeldung ein Kommissioniervorgang zu verstehen, insbesondere die Aufnahme einer Ware aus einem Regalplatz des Warenlagers und die Ablage dieser Ware auf einem Lastteil des Flurförderzeugs. Der Pick umfasst dabei eine vorbestimmte Warenmenge, vorgegeben beispielsweise durch einen dem Kommissioniervorgang zugrunde liegenden Auftrag. Nachdem die Bedienperson den Pick ausgeführt hat, bestätigt sie dies, beispielsweise an dem Flurförderzeug. Die Bedienperson kann hierfür beispielsweise mit einer an dem Flurförderzeug angeordneten Eingabeeinheit interagieren. Auch kann die Bedienperson über eine Funkfernbedienung die Ausführung des Picks an das Flurförderzeug durch eine kabellose Übertragung bestätigen. Grundsätzlich kann eine Bestätigung des ausgeführten Picks über die Funkfernbedienung auch direkt an das Lagerverwaltungssystem erfolgen. Auch kann die Bestätigung des Picks durch das Flurförderzeug an das Lagerverwaltungssystem kabellos weitergeleitet werden.

Das Lagerverwaltungssystem kann dem bestätigten Pick eine Position in dem Warenlager zuordnen, beispielsweise über einen auszuführenden Auftrag und über die Art und Menge der Ware. Ist dem Lagerverwaltungssystem die Pick-Position bekannt, so ist auch die Position des Flurförderzeugs in dem Warenlager bekannt, da dieses üblicherweise in unmittelbarer Nähe der Pick-Position befindlich ist. Zusätzlich zu der Position des Flurförderzeugs bestimmt das Lagerverwaltungssystem auch die Seitenorientierung des Flurförderzeugs relativ zu einem Regalgang des Warenlagers. Das Warenlager kann dabei mehrere Regale aufweisen, wobei zwischen den Regalen jeweils Regalgänge ausgebildet sind. Jeder Regalgang kann zwei Regalseiten aufweisen. Mit Seitenorientierung ist hierbei eine seitliche Positionierung des Flurförderzeugs in einem bestimmten Winkel bzw. einem bestimmten Abstand zu der jeweiligen Regalseite und somit gegenüber der jeweiligen Pick-Position gemeint. Abhängig davon, in welche Richtung das Flurförderzeug in den Regalgang eingefahren ist, kann es beispielsweise in Antriebsrichtung links oder rechts, also mit einer linken oder rechten Fahrzeugseite, zu der bestätigten Pick-Position und somit zu einer bestimmten Regalseite positioniert sein. Das Lagerverwaltungssystem kann dabei die Seitenorientierung des Flurförderzeugs insbesondere anhand einer vorherigen Pick-Position bestimmen, aus der sich die Fahrrichtung des Flurförderzeugs ergibt. Es kann aber auch jeder Pick-Position eine definierte Seitenorientierung des Flurförderzeugs zugeordnet sein, beispielsweise weil der jeweilige Pick-Platz stets von der gleichen Seite angefahren wird. Auch kann vorgesehen sein, dass die Bedienperson beim Bestätigen des Picks gleichzeitig eine Aussage über die Seitenorientierung des Flurförderzeugs an das Flurförderzeug beziehungsweise an das Lagerverwaltungssystem übermittelt.

Das Lagerverwaltungssystem ermittelt schließlich die nächste Pick-Position in dem Warenlager. Es handelt sich hierbei beispielsweise um eine nächste durch die Bedienperson anzufahrende Pick-Position zur Ausführung eines mehrere Pick-Positionen umfassenden Auftrags. Dem Lagerverwaltungssystem kann also insbesondere der gesamte Auftrag bekannt sein. Abhängig von der nächsten Pick-Position übermittelt das Lagerverwaltungssystem einen Steuerbefehl für einen Fahrantrieb und/oder für eine Lenkung des Flurförderzeugs an das Flurförderzeug. Eine Steuereinheit des Flurförderzeugs empfängt den besagten Steuerbefehl und steuert dem Befehl entsprechend den Fahrantrieb bzw. die Lenkung des Flurförderzeugs an. Mittels dieses Steuerbefehls wird das Flurförderzeug in eine vorbestimmte Seitenorientierung für die nächste Pick-Position ausgerichtet. Das Fahrzeug bringt sich somit in eine bestimmte seitliche Positionierung gegenüber der nächsten Pick-Position. Dem Lagerverwaltungssystem ist hierbei also bekannt, welche Seitenorientierung das Flurförderzeug für die nächste Pick-Position einnehmen sollte. Wie oben erläutert, kann beispielsweise jeder Pick-Position eine definierte Seitenorientierung des Fahrzeugs zugeordnet sein. Auch kann sich eine entsprechende Seitenorientierung für jede Pick-Position aus der durch einen Auftrag festgelegten Reihenfolge der abzufahrenden Pick-Positionen ergeben oder durch die Bedienperson gemeldet werden. Ansprechend auf den Steuerbefehl des Lagerverwaltungssystems richtet sich das Flurförderzeug automatisch derart für die nächste Pick-Position aus, dass eine Bedienperson diese Pick-Position für einen Kommissioniervorgang möglichst einfach bedienen kann.

Diese Ausrichtung des Flurförderzeugs in die vorbestimmte Seitenorientierung kann dabei gegenüber dem Regalgang erfolgen, insbesondere relativ zu einer Regalseite des Regalgangs. Befindet sich das Flurförderzeug beispielsweise auf einer in Antriebsrichtung linken Regalseite zur Bedienung einer ersten Bedienposition und befindet sich die nächste durch das Flurförderzeug anzufahrende Pick-Position beispielsweise auf einer rechten Regalseite, so wird das Flurförderzeug durch das Bestätigen des Picks auf der linken Regalseite dazu veranlasst, automatisch auf die rechte Regalseite zu wechseln. Hierbei werden insbesondere der Fahrantrieb und die Lenkung des Flurförderzeugs angesteuert. Befindet sich die nächste Pick-Position auf derselben Regalseite, so kann beispielsweise vorgesehen sein, dass der Fahrantrieb, nicht aber die Lenkung des Flurförderzeugs angesteuert wird. Anschließend wir die nächste Pick-Position durch die Bedienperson angefahren. Beispielsweise kann die Bedienperson das Anfahren der nächsten Pick-Position durch das Flurförderzeug durch eine Funkfernbedienung initiieren.

Gemäß der Erfindung erfolgt somit eine automatische seitliche Ausrichtung eines Flurförderzeugs in Bezug auf eine als nächstes zu bedienende Pick-Position in einem Warenlager. Die Bedienperson muss somit das Flurförderzeug nicht länger manuell gegenüber der nächsten Pick-Position ausrichten und auch keine Vorgabe zur automatischen Ausrichtung machen. Stattdessen erfolgt die Ausrichtung des Flurförderzeugs nach einem Abgleich mit dem Lagerverwaltungssystem vollständig automatisch. Hierdurch wird das Kommissionieren zum einen effizienter. Zum anderen wird der Bedienperson somit über die automatische Ausrichtung des Flurförderzeugs mitgeteilt, auf welcher Regalseite sich die nächste Pick-Position befindet. Das Anfahren der Pick-Position obliegt weiterhin der Bedienperson, sodass diese gemeinsam mit dem Flurförderzeug zur nächsten Pick-Position gelangen kann.

Nach einer bevorzugten Ausgestaltung erfolgt das Ausrichten des Flurförderzeugs in die vorbestimmte Seitenorientierung gegenüber einem Regalgang, wie oben erläutert, indem das Flurförderzeug in einem definierten Abstand zu einer Seite des Regalgangs positioniert wird. Das Flurförderzeug kann dabei so nah an die entsprechende Regalseite heranfahren, dass die Bedienperson in besonders einfacher und effizienter Weise Waren aus dem Regal auf ein Lastteil des Flurförderzeugs transportieren kann. Der Abstand zwischen Flurförderzeug und Regalseite kann dabei so gewählt werden, dass eine Bedienperson sich beim Kommissionieren lediglich umdrehen und keine weiteren Schritte gehen muss. Die Steuereinheit steuert also anhand des durch das Lagerverwaltungssystem übermittelten Steuerbefehls den Fahrantrieb und die Lenkung des Flurförderzeugs derart an, dass das Flurförderzeug in einem definierten Abstand zu einer Regalseite positioniert wird. Das Flurförderzeug kann hierbei insbesondere parallel zu einer Regalseite positioniert werden. Beispielsweise kann bei dieser parallelen Positionierung eine sich entlang der Antriebsrichtung erstreckende Mittellängsachse des Flurförderzeugs parallel zu der jeweiligen Regalseite ausgerichtet sein.

Nach einer weiteren Ausgestaltung erfolgt das Ausrichten des Flurförderzeugs in Antriebsrichtung des Flurförderzeugs links im Regalgang, wenn sich die nächste Pick-Position auf einer in Antriebsrichtung linken Regalseite befindet und das Ausrichten des Flurförderzeugs in Antriebsrichtung des Flurförderzeugs rechts im Regalgang, wenn sich die nächste Pick-Position auf einer in Antriebsrichtung rechten Regalseite befindet. Wie bereits angesprochen, kann das Flurförderzeug also insbesondere an einer linken und/oder rechten Regalseite orientiert werden. Das Flurförderzeug kann dabei insbesondere derart ausgebildet sein, dass es nur in Antriebsrichtung, nicht jedoch entgegengesetzt zu dieser, bewegt werden kann. Eine weitere Ausgestaltung umfasst das Ausrichten des Flurförderzeugs mittig in dem Regalgang, wenn die nächste Pick-Position in einem nächsten Regalgang liegt oder eine letzte Pick-Position erreicht ist. Das Flurförderzeug kann also zu den beiden Regalseiten des Regalgangs einen im Wesentlichen gleichen Abstand aufweisen. Es weist somit keine Seitenorientierung zu einer spezifischen Regalseite auf. Durch eine solche Ausrichtung des Flurförderzeugs kann der Bedienperson mitgeteilt werden, dass sie zum Erreichen der nächsten Pick-Position entweder gemeinsam mit dem Flurförderzeug in den nächsten Regalgang einfahren muss oder dass eine letzte Pick-Position erreicht wurde und ein eventuell auszuführender Auftrag erledigt ist.

Nach einer weiteren Ausgestaltung wird der durch die Bedienperson bestätigte Pick und/oder das durch die Bedienperson ausgelöste Fahrsignal kabellos durch eine Funkfernbedienung an das Flurförderzeug übermittelt. Wie oben bereits erläutert, kann eine Funkfernbedienung vorgesehen sein, durch welche die Bedienperson die Ausführung des Picks kabellos an das Flurförderzeug übermitteln kann. Auch kann die Bedienperson über die Funkfernbedienung das Flurförderzeug bewegen, indem die Bedienperson ein Fahrsignal über die Funkfernbedienung kabellos an das Flurförderzeug übermittelt. Das Fahrsignal kann dabei insbesondere an die Steuereinheit oder eine mit der Steuereinheit in Verbindung stehende Sende- und Empfangseinheit des Flurförderzeugs übermittelt werden. Entsprechend des Fahrsignals erfolgt eine Ansteuerung des Fahrantriebs und/oder der Lenkung des Flurförderzeugs. Bevorzugt erfolgt jedoch über das Fahrsignal lediglich eine Ansteuerung des Fahrantriebs, um das Flurförderzeug vorwärts zu bewegen. Da das Flurförderzeug bereits durch das automatische Ausrichten seitlich zu dem nächsten Pick-Platz orientiert wurde, ist dann lediglich die Vorwärtsbewegung und keine weitere Lenkung, notwendig.

Nach einer weiteren Ausgestaltung wird die Fernsteuerbarkeit des Flurförderzeugs durch das Lagerverwaltungssystem nach Bestätigung des letzten Picks im Regalgang abgeschaltet. Es kann also vorgesehen sein, dass nach Erledigung des letzten Picks und Bestätigung desselben durch die Bedienperson kein automatisches Ausrichten des Flurförderzeugs in Bezug auf die nächste Pick-Position mehr erfolgt, wenn diese im nächsten Regalgang liegt. Mit Fernsteuerbarkeit ist hierbei das automatische Ausrichten des Flurförderzeugs in der vorbestimmten Seitenorientierung für die nächste Pick-Position gemeint. Insbesondere kann vorgesehen sein, dass nach Bestätigung des letzten Picks im Regalgang das Lagerverwaltungssystem über einen Steuerbefehl das Flurförderzeug zunächst mittig innerhalb des Regalgangs positioniert, wie oben erläutert. Anschließend kann die Fernsteuerbarkeit abgeschaltet werden. Die Bedienperson fährt dann über eine manuelle Befehlseingabe mit dem Flurförderzeug in den nächsten Regalgang und steuert dort manuell den nächsten Pick-Platz an. Auch die Seitenorientierung des Flurförderzeugs kann in diesem Fall, also für einen ersten Pick-Platz im Regalgang, manuell erfolgen. Nach Bestätigung dieses ersten Picks im ersten Regalgang kann die Fernsteuerbarkeit des Flurförderzeugs wieder aktiviert werden, es kann also für die darauf folgenden Pick-Plätze im selben Regalgang die erfindungsgemäße automatische Ausrichtung erfolgen.

Das erfindungsgemäße System ist zur Ausführung des erfindungsgemäßen Verfahrens geeignet. Das erfindungsgemäße Verfahren kann mit dem erfindungsgemäßen System ausgeführt werden.

Die Erfindung wird im Folgenden anhand von Figuren erläutert. Soweit nichts anderes angegeben ist bezeichnen gleiche Bezugszeichen gleiche Gegenstände. Es zeigen:
- Figur 1: ein Kommissionierfahrzeug in einer schematischen Ansicht von oben,
- Figur 2: ein Warenlager mit mehreren Regalgängen und einem durch die Regalgänge fahrenden Flurförderzeug in einer Ansicht von oben und
- Figur 3: ein Schema einer Ausgestaltung des Verfahrens zur automatischen Ausrichtung eines Flurförderzeugs in einem Warenlager.

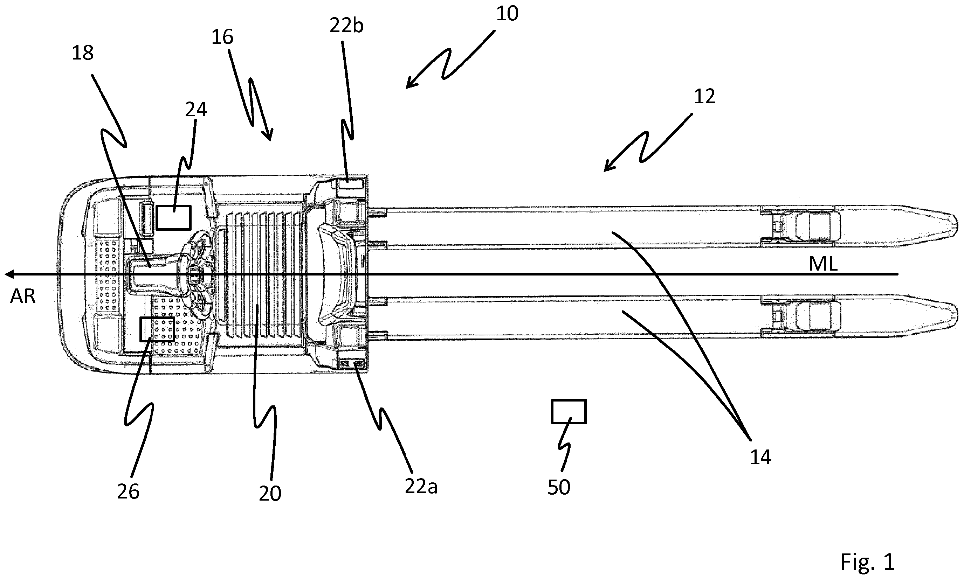

Figur 1 zeigt ein Flurförderzeug 10 umfassend ein Lastteil 12 mit zwei Lastgabeln 14, die zur Aufnahme von Paletten zum Kommissionieren von Waren ausgebildet sind. Das Flurförderzeug 10 umfasst zudem einen Antriebsteil 16 mit einer Kurzdeichsel 18 sowie einer Standplattform 20. Eine auf der Standplattform 20 befindliche Bedienperson kann über die Kurzdeichsel 18 das Flurförderzeug 10 führen. Es kann jedoch auch eine Funkfernbedienung 50 zur Führung des Flurförderzeugs 10 verwendet werden. Die Funkfernbedienung 50 steht hierbei mit einer Steuereinheit 24 des Flurförderzeugs 10 drahtlos in Kontakt. Weiterhin weist das Flurförderzeug 10 zwei Eingabeeinheiten 22a, 22b auf. Ein mit AR gekennzeichneter Pfeil bezeichnet die Antriebsrichtung des Flurförderzeugs. Zudem ist schematisch ein Fahr- und Lenkantrieb 26 dargestellt.

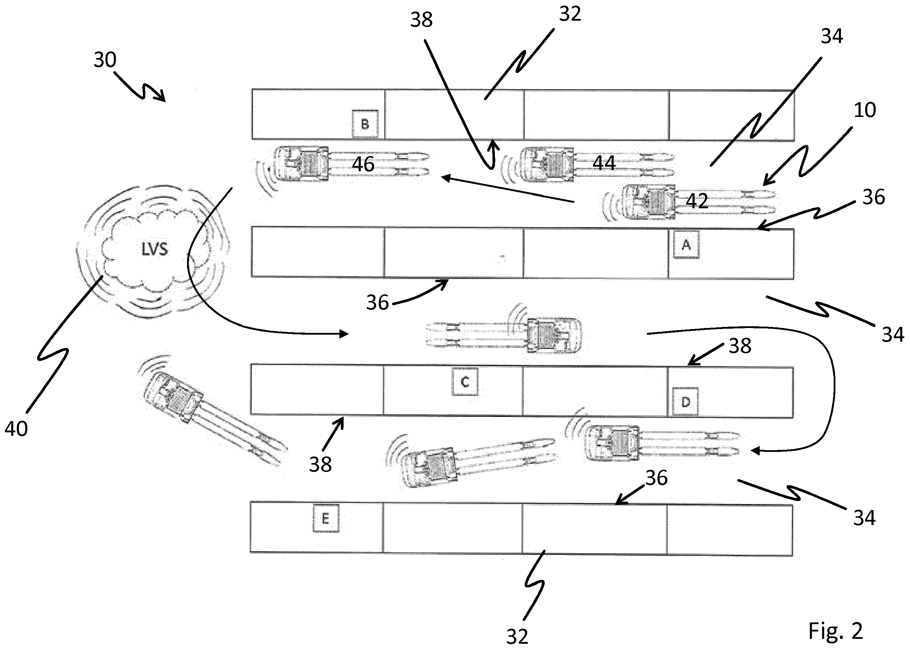

Figur 2 zeigt mehrere Positionen des Flurförderzeugs 10 in einem Warenlager 30. Das Warenlager 30 umfasst vier Regale 32 sowie zwischen den Regalen 32 liegende Regalgänge 34. Die Regale 32 bestehen dabei aus jeweils vier Regalsegmenten. Die Regalgänge 34 weisen wiederum jeweils zwei Regalseiten 36, 38 auf, wobei die in Bezug auf die Antriebsrichtung AR des Flurförderzeugs 10 auf der linken Seite des Flurförderzeugs befindlichen Regalseiten mit dem Bezugszeichen 36 und die gegenüberliegenden rechten Regalseiten mit dem Bezugszeichen 38 gekennzeichnet sind. Mit den Buchstaben A bis E sind unterschiedliche Pick-Positionen innerhalb der Regale 32 gekennzeichnet. Zudem ist ein Lagerverwaltungssystem 40 schematisch als Wolke LVS dargestellt.

Zu Beginn eines Auftrags fährt eine Bedienperson das Flurförderzeug 10 zu der Pick-Position A an die linke Regalseite 36 im in Figur 2 obersten Regalgang 34. Die Bedienperson kann hierfür auf der Standplattform 20 stehend die Kurzdeichsel 18 bedienen oder das Flurförderzeug 10 über die Funkfernbedienung 50 fernsteuern. An der Pick-Position A führt die Bedienperson einen Kommissioniervorgang aus, bewegt also Ware von der Pick-Position A aus dem Regal 32 auf das Lastteil 12 des Flurförderzeugs 10. Das Flurförderzeug 10 ist hierbei an der linken Regalseite 36 orientiert, also parallel zu dieser Regalseite in einem vorbestimmten Abstand ausgerichtet. Nach Ausführung des Pick-Vorgangs bestätigt die Bedienperson die Ausführung des Picks über das linke Bedienelement 22a des Flurförderzeugs 10.

Das Flurförderzeug 10 übermittelt diese Bestätigung anschließend an das Lagerverwaltungssystem 40. Dem Lagerverwaltungssystem 40 sind dabei alle Pick-Positionen A bis E bekannt, so dass es dem Flurförderzeug 10 eine genaue Position in dem Warenlager 30 zuordnen kann. Zudem bestimmt das Lagerverwaltungssystem 40 die Seitenorientierung des Flurförderzeugs 10 relativ zu der Regalseite 36, an welcher sich die Pick-Position A befindet. Dies kann, wie erläutert, auf mehrere Weisen passieren: Beispielsweise kann jeder Pick-Position eine bestimmte Seitenorientierung des Flurförderzeugs zugeordnet sein oder das Lagerverwaltungssystem kann die Seitenorientierung des Flurförderzeugs aus der Fahrrichtung des Flurförderzeugs ermitteln. Auch kann das Lagerverwaltungssystem die Seitenorientierung des Flurförderzeugs anhand der Eingaben des Bedieners identifizieren. In dem vorliegenden Ausführungsbeispiel wird dem Lagerverwaltungssystem 40 mitgeteilt, dass das Flurförderzeug 10 an der linken Regalseite 36 orientiert ist, da die Bedienperson den ausgeführten Pick an der linken Bedieneinheit 22a bestätigt.

Das Lagerverwaltungssystem 40 ermittelt anschließend anhand eines in dem Lagerverwaltungssystem 40 hinterlegten Auftrags die nächste durch die Bedienperson anzufahrende Pick-Position B. Das Lagerverwaltungssystem 40 übermittelt anschließend einen Steuerbefehl für den Fahrantrieb beziehungsweise die Lenkung 26 an die Steuereinheit 24 des Flurförderzeugs 10. Auf Grundlage dieses Steuerbefehls richtet sich das Flurförderzeug 10 derart in eine vorbestimmte Seitenorientierung für die nächste Pick-Position B in dem Regalgang 34 aus, dass es an die zu der Pick-Position B gehörige rechte Regalseite 38 heranfährt. Das Flurförderzeug 10 fährt also automatisch von der Position 42 zu der Position 44 und orientiert sich somit an der rechten Regalseite 38. Das Flurförderzeug richtet sich rechts im Regalgang aus, da die nächste Pick-Position B sich auf der in Antriebsrichtung AR rechten Regalseite 38 befindet. Das Ausrichten in die vorbestimmte Seitenorientierung für die nächste Pick-Position B besteht dabei konkret in der parallelen Ausrichtung einer Mittellängsachse ML (siehe Fig. 1) des Flurförderzeugs 10 gegenüber der rechten Regalseite 38 in einem vorbestimmten Abstand. Um von der Position 42 zu der Position 44 zu gelangen, werden entsprechend Fahrantrieb sowie Lenkung des Flurförderzeugs angesteuert. Die Bedienperson muss somit das Flurförderzeug nicht länger selbstständig an der rechten Regalseite 38 ausrichten. Zudem wird der Bedienperson somit mitgeteilt, dass die nächste Pick-Position B sich auf der der Pick-Position A gegenüberliegenden Regalseite befindet.

Die nächste Pick-Position B wird dann anschließend durch die Bedienperson angesteuert, indem diese ein entsprechendes Fahrsignal auslöst. Hierfür kann die Bedienperson beispielsweise auf die Standplattform 20 steigen und über die Steuerung 18 bis zum Pick-Platz B vorfahren. Auch kann die Bedienperson das Fahrsignal über die Funkfernbedienung 50 auslösen. Anschließend kann die Bedienperson an der Pick-Position B einen Kommissioniervorgang ausführen. Nachdem auch dieser Pick-Vorgang abgeschlossen ist, kann die Bedienperson den Pick über die Bedieneinheit 22b an dem Flurförderzeug bestätigen. Dieses kann sich dann in der erläuterten Weise für eine Bedienung des nächsten Pick-Platzes C ausrichten. Auch kann sich das Flurförderzeug 10, nachdem der Pick-Vorgang an der Pick-Position erledigt und durch die Bedienperson bestätigt wurde, nach Kommunikation mit dem Lagerverwaltungssystem 40 mittig in dem obersten Regalgang 34 ausrichten und der Bedienperson somit mitteilen, dass die nächste Pick-Position C sich in dem darauffolgenden Regalgang 34 befindet. Die Bedienperson kann dann insbesondere manuell mit dem Flurförderzeug 10 in den nächsten Regalgang entlang der dargestellten Pfeillinie einfahren. Die Bedienperson kann dann den Pick-Platz C zunächst manuell anfahren und das Flurförderzeug an der rechten Regalseite 38 ausrichten.

Nach Bestätigen des Picks an Position C kann das Flurförderzeug sich dann wiederum mittig im mittleren Regalgang 34 positionieren, um der Bedienperson anzuzeigen, dass sich die nächste Pick-Position D im unteren Regalgang 34 befindet. Die Bedienperson kann dann wiederrum entlang der dargestellten Pfeillinie mit dem Flurförderzeug 10 zu der Pick-Position D fahren. Nach Bestätigung des Picks D richtet sich das Flurförderzeug 10 automatisch an der gegenüberliegenden linken Regalseite 36 für die Pick-Position E aus und kann durch die Bedienperson von dort aus zu dem Pick-Platz E gefahren werden. Nach Bestätigung des letzten Picks am Pick-Platz E kann sich das Flurförderzeug wiederum mittig in dem Regalgang 34 ausrichten und der Bedienperson somit mitteilen, dass der letzte Pick-Vorgang erledigt und der Auftrag ausgeführt ist.

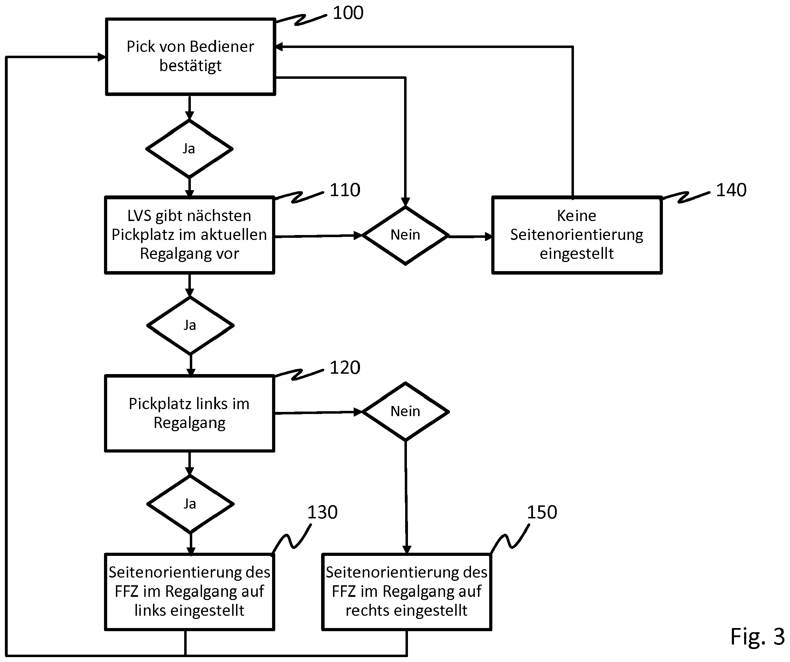

Figur 3 zeigt schematisch den Ablauf des Verfahrens. Das Verfahren beginnt mit dem Bestätigen eines Picks durch eine Bedienperson ("Pick von Bediener bestätigt", Schritt 100). Wird eine solche Pick-Bestätigung verzeichnet, so gibt das Lagerverwaltungssystem den nächsten Pick-Platz in dem aktuellen Regalgang vor ("LVS gibt nächsten Pick-Platz im aktuellen Regalgang vor", Schritt 110). Das Lagerverwaltungssystem schließt dabei, wie erläutert, aus der bestätigten Pick-Position auf die Position sowie die Seitenorientierung des Flurförderzeugs. Liegt der nächste Pick-Platz im aktuellen Regalgang, so ermittelt das Lagerverwaltungssystem zunächst, ob der Pick-Platz links im Regalgang liegt ("Pick-Platz links im Regalgang", Schritt 120). Sollte der nächste Pick-Platz im Regalgang links liegen, so wird auch die Seitenorientierung des Flurförderzeugs auf links eingestellt ("Seitenorientierung des FFZ im Regalgang auf links eingestellt", Schritt 130). Somit wird das Flurförderzeug also in diesem Fall an der linken Regalseite ausgerichtet. Anschließend kann das Verfahren von vorn beginnen. Sollte die Bedienperson keinen Pick bestätigen oder sollte der nächste der nächste Pick-Platz nicht im aktuellen Regalgang liegen, so wird keine Seitenorientierung eingestellt ("Keine Seitenorientierung eingestellt", Schritt 140). Das Verfahren beginnt anschließend wieder von vorn. Alternativ kann vorgesehen sein, dass das Flurförderzeug mittig im Regalgang positioniert wird, sofern die letzte Pick-Position im Regalgang erreicht wurde. Sollte die nächste Pick-Position im aktuellen Regalgang nicht links liegen, so wird die Seitenorientierung des Flurförderzeugs auf rechts eingestellt ("Seitenorientierung des FFZ im Regalgang auf rechts eingestellt", Schritt 150). Auch hieran schließt sich der Neustart des Verfahrens an. Es ist alternativ selbstverständlich denkbar, dass im Schritt 120 geprüft wird, ob der Pick-Platz rechts im Regalgang liegt, was zu einer Vertauschung der darauffolgenden Schritte 130 und 150 würde.

## Patentansprüche

1. Verfahren zur automatischen Ausrichtung eines Flurförderzeugs in einem Warenlager mit den Schritten:
- Bestätigen eines Picks durch eine Bedienperson,
- Bestimmen einer Position des Flurförderzeugs (10) in einem Warenlager (30) anhand der Position (A, B, C, D, E) des bestätigten Picks durch ein Lagerverwaltungssystem (40),
- Bestimmen einer Seitenorientierung des Flurförderzeugs (10) relativ zu einer Regalseite (36, 38) eines Regalgangs (34) des Warenlagers (30) anhand der Position (A, B, C, D, E) des bestätigten Picks durch das Lagerverwaltungssystem (40),
- Ermitteln der nächsten Pickposition (A, B, C, D, E) in dem Warenlager (30) durch das Lagerverwaltungssystem (40),
- Übermitteln eines Steuerbefehls für einen Fahrantrieb und/oder eine Lenkung (26) des Flurförderzeugs (10) durch das Lagerverwaltungssystem (40) an das Flurförderzeug (10) zum
- Ausrichten des Flurförderzeugs (10) ansprechend auf den übermittelten Steuerbefehl in eine vorbestimmte Seitenorientierung für die nächste Pickposition (A, B, C, D, E) in dem Warenlager (30), und
- Anfahren der nächsten Pickposition (A, B, C, D, E) ansprechend auf ein durch die Bedienperson ausgelöstes Fahrsignal.

2. Verfahren nach Anspruch 1, wobei das Ausrichten des Flurförderzeugs (10) in die vorbestimmte Seitenorientierung gegenüber einem Regalgang (34) erfolgt, indem das Flurförderzeug (10) in einem definierten Abstand zu einer Seite (36, 38) des Regalgangs (34) positioniert wird.

3. Verfahren nach Anspruch 1 oder 2, **gekennzeichnet durch** Ausrichten des Flurförderzeugs (10) in Antriebsrichtung (AR) links im Regalgang, wenn sich die nächste Pickposition (A, B, C, D, E) auf einer in Antriebsrichtung (AR) linken Regalseite (36) befindet und Ausrichten des Flurförderzeugs (10) in Antriebsrichtung (AR) rechts im Regalgang (34), wenn sich die nächste Pickposition (A, B, C, D, E) auf einer in Antriebsrichtung (AR) rechten Regalseite (38) befindet.

4. Verfahren nach einem der vorhergehenden Ansprüche, **gekennzeichnet durch** Ausrichten des Flurförderzeugs (10) mittig in dem Regalgang (34), wenn die nächste Pickposition (A, B, C, D, E) in einem nächsten Regalgang (34) liegt oder eine letzte Pickposition (A, B, C, D, E) erreicht ist.

5. Verfahren nach einem der vorhergehenden Ansprüche, wobei der durch die Bedienperson bestätigte Pick und/oder das durch die Bedienperson ausgelöste Fahrsignal kabellos durch eine Funkfernbedienung (50) an das Flurförderzeug (10) übermittelt wird.

6. Verfahren nach einem der vorhergehenden Ansprüche, **gekennzeichnet durch** Abschalten der Fernsteuerbarkeit des Flurförderzeugs (10) durch das Lagerverwaltungssystem (40) nach Bestätigung des letzten Picks im Regalgang (34).

7. System aus einem Flurförderzeug und einem Warenlager, umfassend
- Eine an einem Flurförderzeug (10) angeordnete Eingabeeinheit (22a, 22b), dazu ausgebildet, durch eine Bedienperson ausgelöste Bedienbefehle zum Bestätigen eines Picks und zur Bewegung des Flurförderzeugs (10) zu empfangen,
- Ein Lagerverwaltungssystem (40), dazu ausgebildet, eine Position des Flurförderzeugs (10) in einem Warenlager (30) und eine Seitenorientierung des Flurförderzeugs (10) relativ zu einer Regalseite (36, 38) eines Regalgangs (34) des Warenlagers (30) anhand der Position (A, B, C, D, E) des bestätigten Picks zu bestimmen, die nächsten Pickposition (A, B, C, D, E) in dem Warenlager (30) anhand eines aktuellen Auftrags zu ermitteln und einen Steuerbefehl an das Flurförderzeug (10) zu übermitteln,
- Eine Steuereinheit (24) des Flurförderzeugs (10), dazu ausgebildet, den von dem Lagerverwaltungssystem (40) übermittelten Steuerbefehl zu empfangen und einen Fahrantrieb (26) und/oder eine Lenkung (26) des Flurförderzeugs zum automatischen Ausrichten des Flurförderzeugs (10) in eine vorbestimmte Seitenorientierung für die nächste Pickposition (A, B, C, D, E) in dem Warenlager (30) anzusteuern.

8. System nach Anspruch 7, **dadurch gekennzeichnet, dass** die Steuereinheit (24) dazu ausgebildet ist, das Flurförderzeug (10) in die vorbestimmte Seitenorientierung des Flurförderzeugs (10) gegenüber einem Regalgang (34) auszurichten, indem über den Fahrantrieb (26) und/oder die Lenkung (26) das Flurförderzeug (10) in einem definierten Abstand zu einer Seite (36, 38) des Regalgangs (34) positioniert wird.

9. System nach Anspruch 7 oder 8, **dadurch gekennzeichnet, dass** die Steuereinheit (24) dazu ausgebildet ist, das Flurförderzeug (10) in Antriebsrichtung (AR) links im Regalgang (34) auszurichten, wenn sich die nächste Pickposition (A, B, C, D, E) auf einer in Antriebsrichtung (AR) linken Regalseite (36) befindet und dass die Steuereinheit (24) dazu ausgebildet ist, das Flurförderzeug (10) in Antriebsrichtung (AR) rechts im Regalgang (34) auszurichten, wenn sich die nächste Pickposition (A, B, C, D, E) auf einer in Antriebsrichtung (AR) rechten Regalseite (38) befindet.

10. System nach einem der Ansprüche 7 bis 9, **dadurch gekennzeichnet, dass** die Steuereinheit (24) dazu ausgebildet ist, das Flurförderzeug (10) mittig in dem Regalgang (34) auszurichten, wenn die nächste Pickposition (A, B, C, D, E) in einem nächsten Regalgang (34) liegt oder eine letzte Pickposition (A, B, C, D, E) erreicht ist.

11. System nach einem der Ansprüche 7 bis 10, weiter umfassend eine Funkfernbedienung (50) zum Bestätigen eines Picks und/oder zur Bewegung des Flurförderzeugs (10) durch die Bedienperson.

12. System nach einem der Ansprüche 7 bis 11, **dadurch gekennzeichnet, dass** die Steuereinheit (24) die Fernsteuerbarkeit des Flurförderzeugs (10) durch das Lagerverwaltungssystem (40) nach Bestätigung des letzten Picks im Regalgang (34) abschaltet.

## Claims

1. A method for automatically aligning an industrial truck in a warehouse having the following steps:
An operator confirms a pick,
A position of the industrial truck (10) in a warehouse (30) is determined by a warehouse administration system (40) by the position (A, B, C, D, E) of the confirmed pick,
A side orientation of the industrial truck (10) relative to a shelf side (36, 38) of a shelf aisle (34) of the warehouse (30) is determined by the warehouse administration system (40) by the position (A, B, C, D, E) of the confirmed pick,
The next picking position (A, B, C, D, E) in the warehouse (30) is ascertained by the warehouse administration system (40),
A control command for a drive and/or a steering system (26) of the industrial truck (10) is transmitted by the warehouse administration system (40) to the industrial truck (10) so that
The industrial truck (10) is aligned corresponding to the transmitted control command in a predetermined side orientation for the next pick position (A, B, C, D, E) in the warehouse (30), and
The next pick position (A, B, C, D, E) is approached in response to a driving signal given by the operator.

2. The method according to claim 1, wherein the industrial truck (10) is aligned in the predetermined side orientation relative to a shelf aisle (34) in that the industrial truck (10) is positioned at a specific distance to a side (36, 38) of the shelf aisle (34),

3. The method according to claim 1 or 2, **characterized in that** the industrial truck (10) is aligned in the driving direction (AR) on the left in the shelf aisle when the next picking position (A, B, C, D, E) is located on a shelf side (36) on the left in the driving direction (AR), and the industrial truck (10) is aligned in the driving direction (AR) on the right in the shelf aisle (34) when the next picking position (A, B, C, D, E) is located on a shelf side (38) on the right in the driving direction (AR).

4. The method according to one of the preceding claims, **characterized by** aligning the industrial truck (10) in the middle of the shelf aisle (34) when the next picking position (A, B, C, D, E) is in an adjacent shelf aisle (34), or a last picking position (A, B, C, D, E) has been reached.

5. The method according to one of the preceding claims, wherein the pick confirmed by the operator and/or the driving signal given by the operator is transmitted wirelessly by a radio remote control (50) to the industrial truck (10).

6. The method according to one of the preceding claims, **characterized in that** the remote controllability of the industrial truck (10) is switched off by the warehouse administration system (40) after confirmation of the last pick in the shelf aisle (34).

7. A system consisting of an industrial truck and warehouse, comprising:
An input unit (22a, 22b) arranged on an industrial truck (10) that is designed to receive operating commands given by an operator to confirm a pick and move the industrial truck (10),
A warehouse administration system (40) that is designed to determine a position of the industrial truck (10) in a warehouse (30) and a side orientation of the industrial truck (10) relative to a shelf side (36, 38) of a shelf aisle (34) of the warehouse (30) with reference to the position (A, B, C, D, E) of the confirmed pick, to ascertain the next pick position (A, B, C, D, E) in the warehouse (30) with reference to a current order, and to transmit a control command to the industrial truck (10),
A control unit (24) of the industrial truck (10) that is designed to receive the control command transmitted by the warehouse administration system (40) and to control a drive (26) and/or a steering system (26) of the industrial truck to automatically align the industrial truck (10) in a predetermined side orientation for the next pick position (A, B, C, D, E) in the warehouse (30).

8. The system according to claim 7, **characterized in that** the control unit (24) is designed to align the industrial truck (10) in the predetermined side orientation of the industrial truck (10) relative to a control aisle (34) **in that** the industrial truck (10) is positioned at a specific distance to a side (36, 38) of the shelf aisle (34) by the drive (26) and/or the steering system (26).

9. The system according to claim 7 or 8, **characterized in that** the control unit (24) is designed to align the industrial truck (10) in the driving direction (AR) on the left in the shelf aisle (34) when the next picking position (A, B, C, D, E) is located on a shelf side (36) on the left in the driving direction (AR), and the control unit (24) is designed to align the industrial truck (10) in the driving direction (AR) on the right in the shelf aisle (34) when the next picking position (A, B, C, D, E) is located on a shelf side (38) on the right in the driving direction (AR).

10. The system according to one of claims 7 to 9, **characterized in that** the control unit (24) is designed to align the industrial truck (10) in the middle of the shelf aisle (34) when the next picking position (A, B, C, D, E) is in an adjacent shelf aisle (34), or a last picking position (A, B, C, D, E) has been reached.

11. The system according to one of claims 7 to 10, moreover comprising a radio remote control (50) for confirming a pick and/or for an operator to move the industrial truck (10).

12. The system according to one of claims 7 to 11, **characterized in that** the control unit (24) switches off the remote controllability of the industrial truck (10) by the warehouse administration system (40) after confirmation of the last pick in the shelf aisle (34).

## Revendications

1. Procédé d'alignement automatique d'un chariot de manutention dans un entrepôt comportant les étapes suivantes :
- l'actionnement d'un préhenseur par un opérateur,
- la détermination d'une position du chariot de manutention (10) dans un entrepôt (30) à l'aide de la position (A, B, C, D, E) du préhenseur actionné au moyen d'un système de gestion d'entrepôt (40),
- la détermination d'une orientation latérale du chariot de manutention (10) par rapport à un côté de rayonnage (36, 38) d'un couloir de rayonnage (34) de l'entrepôt (30) à l'aide de la position (A, B, C, D, E) du préhenseur actionné au moyen du système de gestion d'entrepôt (40),
- l'évaluation de la position de préhenseur suivante (A, B, C, D, E) dans l'entrepôt (30) au moyen du système de gestion d'entrepôt (40),
- la transmission d'une instruction de commande d'un mécanisme d'entraînement et/ou d'une direction (26) du chariot de manutention (10) au moyen du système de gestion d'entrepôt (40) à destination du chariot de manutention (10) servant à
- l'alignement du chariot de manutention (10) en réponse à l'instruction de commande transmise dans une orientation latérale prédéfinie pour la position de préhenseur suivante (A, B, C, D, E) dans l'entrepôt (30), et
- l'accès à la position de préhenseur suivante (A, B, C, D, E) en réponse à un signal de déplacement déclenché par l'opérateur.

2. Procédé selon la revendication 1, dans lequel l'alignement du chariot de manutention (10) est réalisé dans l'orientation latérale prédéfinie avec un couloir de rayonnage (34), le chariot de manutention (10) étant alors positionné à une certaine distance d'un côté (36, 38) du couloir de rayonnage (34).

3. Procédé selon la revendication 1 ou 2, **caractérisé par** l'alignement du chariot de manutention (10) dans la direction d'entraînement (AR) à gauche à l'intérieur du couloir de rayonnage (34), si la position de préhenseur suivante (A, B, C, D, E) se trouve sur un côté de rayonnage gauche (36) dans la direction d'entraînement (AR) et par l'alignement du chariot de manutention (10) dans la direction d'entraînement (AR) à droite à l'intérieur du couloir de rayonnage (34), si la position de préhenseur suivante (A, B, C, D, E) se trouve sur un côté de rayonnage droit (38) dans la direction d'entraînement (AR).

4. Procédé selon l'une des revendications précédentes, **caractérisé par** l'alignement du chariot de manutention (10) au centre dans le couloir de rayonnage (34), si la position de préhenseur suivante (A, B, C, D, E) se situe dans un couloir de rayonnage suivant (34) ou si une dernière position de préhenseur (A, B, C, D, E) est atteinte.

5. Procédé selon l'une des revendications précédentes, dans lequel le préhenseur actionné par l'opérateur et/ou le signal de déplacement déclenché par l'opérateur donnent lieu à une communication sans fil avec le chariot de manutention (10) via une radiotélécommande (50).

6. Procédé selon l'une des revendications précédentes, **caractérisé par** la désactivation de la télécommandabilité du chariot de manutention (10) au moyen du système de gestion d'entrepôt (40) après l'actionnement du dernier préhenseur dans le couloir de rayonnage (34).

7. Système formé par un chariot de manutention et un entrepôt, comportant
- une unité de saisie (22a, 22b) disposée sur un chariot de manutention (10), conçue pour recevoir les instructions de commande émises par un opérateur en vue d'actionner un préhenseur et de mouvoir le chariot de manutention (10),
- un système de gestion d'entrepôt (40) conçu pour déterminer une position du chariot de manutention (10) dans un entrepôt (30) et une orientation latérale du chariot de manutention (10) par rapport à un côté de rayonnage (36, 38) d'un couloir de rayonnage (34) de l'entrepôt (30) à l'aide de la position (A, B, C, D, E) du préhenseur actionné, pour évaluer la position de préhenseur suivante (A, B, C, D, E) dans l'entrepôt (30) à l'aide d'un ordre de travail actuel et pour transmettre une instruction de commande au chariot de manutention (10),
- une unité de commande (24) du chariot de manutention (10) conçue pour recevoir l'instruction de commande transmise par le système de gestion d'entrepôt (40) et pour activer un mécanisme d'entraînement (26) et/ou une direction (26) du chariot de manutention en vue d'aligner automatiquement le chariot de manutention (10) dans une orientation latérale prédéfinie pour la position de préhenseur suivante (A, B, C, D, E) dans l'entrepôt (30).

8. Système selon la revendication 7, **caractérisé en ce que** l'unité de commande (24) est conçue pour aligner le chariot de manutention (10) dans l'orientation latérale prédéfinie du chariot de manutention (10) avec un couloir de rayonnage (34), le chariot de manutention (10) étant alors positionné à une certaine distance d'un côté (36, 38) du couloir de rayonnage (34) par le biais du mécanisme d'entraînement (26) et/ou de la direction (26).

9. Système selon la revendication 7 ou 8, **caractérisé en ce que** l'unité de commande (24) est conçue pour aligner le chariot de manutention (10) dans la direction d'entraînement (AR) à gauche à l'intérieur du couloir de rayonnage (34), si la position de préhenseur suivante (A, B, C, D, E) se trouve sur un côté de rayonnage gauche (36) dans la direction d'entraînement (AR) et que l'unité de commande (24) est conçue pour aligner le chariot de manutention (10) dans la direction d'entraînement (AR) à droite à l'intérieur du couloir de rayonnage (34), si la position de préhenseur suivante (A, B, C, D, E) se trouve sur un côté de rayonnage droit (38) dans la direction d'entraînement (AR).

10. Système selon l'une des revendications 7 à 9, **caractérisé en ce que** l'unité de commande (24) est conçue pour aligner le chariot de manutention (10) au centre dans le couloir de rayonnage (34) si la position de préhenseur suivante (A, B, C, D, E) se situe dans un couloir de rayonnage suivant (34) ou si une dernière position de préhenseur (A, B, C, D, E) est atteinte.

11. Système selon l'une des revendications 7 à 10, comportant encore une radiotélécommande (50) servant à actionner un préhenseur et/ou à faire déplacer le chariot de manutention (10) par l'opérateur.

12. Dispositif selon l'une des revendications 7 à 11, **caractérisé en ce que** l'unité de commande (24) désactive la télécommandabilité du chariot de manutention (10) au moyen du système de gestion d'entrepôt (40) après l'actionnement du dernier préhenseur dans le couloir de rayonnage (34).
